Europäisches Patentamt

European Patent Office

Office européen des brevets

(19)

(11) Veröffentlichungsnummer : **0 087 769**
**B1**

(12) # EUROPÄISCHE PATENTSCHRIFT

(45) Veröffentlichungstag der Patentschrift :
28.05.86

(51) Int. Cl.⁴ : **A 23 L   1/231**

(21) Anmeldenummer : 83101827.0

(22) Anmeldetag : 24.02.83

(54) **Verfahren zur Herstellung von artspezifischen, konzentrierten Aromen auf Fleischbasen.**

(30) Priorität : 24.02.82 DE 3206587

(43) Veröffentlichungstag der Anmeldung :
07.09.83 Patentblatt 83/36

(45) Bekanntmachung des Hinweises auf die Patenterteilung : 28.05.86 Patentblatt 86/22

(84) Benannte Vertragsstaaten :
BE CH FR GB IT LI NL

(56) Entgegenhaltungen :
CH-A-   497 138
CH-A-   536 076
DE-A- 2 149 700
DE-B- 2 129 168
US-A- 3 615 698
Die Akte enthält technische Angaben, die nach dem
Eingang der Anmeldung eingereicht wurden und die
nicht in dieser Patentschrift enthalten sind.

(73) Patentinhaber : **Dragoco Gerberding & Co. GmbH**
**Dragocostrasse 1**
**D-3450 Holzminden (DE)**

(72) Erfinder : **Huth, Heinz, Dr.**
**An der Schleifmühle 11**
**D-3450 Holzminden (DE)**
Erfinder : **Schum, Hans**
**An der Schleifmühle 10**
**D-3450 Holzminden (DE)**

(74) Vertreter : **Deufel, Paul, Dr. et al**
**Patentanwälte Müller-Boré, Deufel, Schön, Hertel,**
**Lewald, Otto Isartorplatz 6 Postfach 26 02 47**
**D-8000 München 26 (DE)**

**Beschreibung**

Es sind bereits verschiedene Verfahren bekannt, industriell hergestellten Nahrungsmitteln Aromatisierungsmittel zuzusetzen, um diesen den fleischigen Geruch und Geschmack von küchenmässig zubereiteten Gerichten zu verleihen. Hierbei handelt es sich im wesentlichen um Aromen auf Basis von Fleischextrakten, Protein-Hydrolysaten oder Hefeautolysaten. Die bisher bekannten Aromatisierungsmittel weisen jedoch den Nachteil auf, dass sie einen auf das Ausgangsmaterial zurückführenden Nebengeschmack aufweisen, der als bitter, angebrannt, hefig oder metallisch und nicht artspezifisch beschrieben wird. Weiterhin wird ihr Einsatz unter Umständen durch den hohen Gehalt an Natriumchlorid eingeschränkt.

Die besten Ergebnisse sind bisher mit konzentrierten wässrigen Aromen auf Fleischbasis erzielt worden, die nach dem in der DE-PS 21 29 168 beschriebenen Verfahren hergestellt werden. Aufgabe der vorliegenden Erfindung ist es, diese Aromen durch das nachstehend näher beschriebene Verfahren weiter zu verbessern und um ein Mehrfaches zu verstärken.

Gegenstand der Erfindung ist ein Verfahren zur Herstellung von ausgeprägt artspezifischen, konzentrierten Aromen auf Fleischbasis. Das erfindungsgemässe Verfahren ist in den vorstehenden Ansprüchen zusammengefasst.

Der Begriff « konzentrierte wässrige Fleischbasis » bedeutet einen besonderen Fleischextrakt, und zwar einen konzentrierten Extrakt, der nach dem Verfahren gemäß DE-PS 21 29 168 gewonnen wurde. Ausgangsmaterial ist irgend ein für den menschlichen Verkehr geeignetes Warmblütlerfleisch. Wie in der DE-PS 21 29 168 beschrieben ist, werden die konzentrierten wässrigen Fleischbasen dadurch gewonnen, daß man Fleischteile und/oder Fleischabfälle mit oder ohne Knochen zerkleinert, wobei man während und/oder nach der Zerkleinerung Wasser bis zur Erzielung einer pumpfähigen Masse zusetzt, dann die erhaltene Masse, gegebenenfalls in einem Autoklaven, auf 95 bis 128 °C erhitzt, dann auf etwa 50 °C abkühlt, die abgekühlte Masse in einen wasserunlöslichen Rückstand einerseits und eine Fett-Wasser-Phase andererseits trennt, die Fett-Wasser-Phase mit Proteinasen behandelt, die dabei erhaltene Masse in eine Fett-Phase, eine wäßrige Phase und einen unlöslichen Rückstand trennt, die dabei erhaltene wäßrige Phase uperisiert und im Vakuum bei niedriger Temperatur konzentriert. Spezielle Ausgestaltungen dieses Verfahrens sind in der DE-PS 21 29 168 beschrieben, deren gesamter Inhalt durch ausdrückliche Bezugnahme im Hinblick auf die Erläuterung des Begriffs « Fleischbasis » als Teil der Offenbarung der vorliegenden Erfindung zu gelten hat. Der Trockenstoffgehalt der, wie beschrieben, erhaltenen konzentrierten Extrakte, liegt dabei gewöhnlich zwischen 60 und 85 Gew.-%, vorzugsweise 60-82 Gew.-%, insbesondere 74-78 Gew.-%. Derartige konzentrierte Extrakte werden erfindungsgemäß als Ausgangsmaterial verwendet.

Die für die Aromatisierung von Nahrungsmitteln geeigneten Aminosäuren, Proteinhydrolysate, Geschmacksverstärker und Zuckerstoffe sind dem Fachmann grundsätzlich bekannt. Hervorzuheben seien hier als bevorzugte Aminosäuren oder ihre Salze neben L-Cystein die Aminosäuren Serin, Asparaginsäure, Alanin, Histidin, Methionin, Glycin, Arginin, Prolin und Glutaminsäure. Die Proteinhydrolysate sind vorzugsweise pflanzlichen Ursprungs. Bevorzugte Einsatzform ist Hydrolysatpulver. Von den Zuckerstoffen werden bevorzugt die Mono- und Disaccharide eingesetzt, wie z.B. Glukose, Fruktose, Ribose, Saccharose, Lactose, und/oder Maltose. Die Zuckerstoffe können auch in Form von Mischungen oder industriell erzeugter Gemische zum Einsatz kommen, wie z.B. Invertzuckersirup, enzymatisch aufgespaltene Lactose und Stärkesirup. Die bevorzugten Geschmacksverstärker sind Natriumglutamat, Natriuminosinat und Natriumguanylat.

Durch Veränderung der im Verfahrensschritt g) genannten Reaktionszeit und bei einer entsprechenden Temperaturführung kann der erzeugte Aromastoff geschmacklich verändert werden. So ergibt eine Reaktionszeit von 8 bis 10 Min. bei einer Temperatur von 95 °C einen typischen Kochfleischgeschmack. Durch Temperaturerhöhung und Verlängerung der Reaktionszeit ergeben sich typische Bratfleischnoten.

Als Endprodukt des erfindungsgemäßen Verfahrens erhält man bei Raumtemperatur haltbare, geschmacklich standardisierbare Aromatisierungsmittel, die sich zur Aromatisierung von Nahrungsmitteln und Tierfutter hervorragend eignen, z.B. von Fleisch- und Wurstprodukten wie Schinken, Würsten, Pasteten, Fleisch- und Wurstkonserven, Suppen, Saucen, Feinkosterzeugnissen wie Mayonnaisen, Fleisch- und Wurstsalaten, Snackerzeugnissen wie Kartoffelchips, Flips, Extruderprodukten, Backwaren und Teig wie Brot, Brezeln, Fertiggerichten aller Art, Gemüsekonserven, Fisch und Fischkonserven, Fischmarinaden, Räucherfisch, Muscheln und Krebsen, sowie von Tierfutter wie Hundekuchen oder Tierfutterkonserven.

Die nach dem erfindungsgemäßen Verfahren hergestellten Fleischaromen besitzen natürlichen Fleischgeschmak, der sich signifikant vom Geschmack von Pflanzeneiweiß- und Tiereiweißhydrolysaten sowie vom Geschmack von Fleischextrakten unterscheidet. Darüber hinaus der Fleischgeschmack der erfindungsgemäß hergestellten Fleischaromen um ein mehrfaches intensiver als der Geschmack des küchenmäßig zubereiteten natürlichen Fleisches sowie der bisher bekannten konzentrierten wässrigen Aroma auf Fleischbasis, beispielsweise gemäß DE-PS 21 29 168.

Die folgenden Beispiele erläutern die Erfindung. Prozentangaben sind Gewichtsprozent und beziehen sich, falls nichts anderes angegeben ist, auf die Menge des Gesamtansatzes, einschließlich Wasser. Die Homogenisierzeit der Materialien a) bis e) ergibt sich durch die Verarbeitung der Masse in technischen Homogenisatoren. Bevorzugt werden Hochdruckhomogenisatoren eingesetzt. Das Homogenisieren soll ein völliges Auflösen der festen Stoffe und eine Verteilung des Fettes bewirken. Dieses Ziel ist in technischen Apparaturen in wenigen Minuten erreicht.

Als Fett eignen sich alle Fette warmblütiger Tiere. Vom Rind kann z. B. nicht nur Rindstalg, sondern auch Butterfett eingesetzt werden.

Die Autoklavenbehandlung gemäß Stufe g) erfolgt vorzugsweise ab ca. 95 °C in geschlossenen Autoklaven und unter Eigendruck.

Beispiel 1

| Huhnaroma | Gew.-% |
| --- | --- |
| Wässriges, konzentriertes Aroma auf Huhnbasis, mit einem Trockstoffgehalt von 74 Gew.-% | 70,0 |
| 1-Cysteinhydrochlorid | 0,5 |
| Natriumglutamat | 3,5 |
| Natriuminosinat-Natriumguanylat-Gemisch 1 : 1 | 0,5 |
| Proteinhydrolysatpulver, Fa, FIS (Nestle) Typ « RFC » | 5,0 |
| Saccharose | 5,0 |
| Hühnerfett | 15,5 |

Das wässrige, konzentrierte Aroma auf Hühnerfleischbasis wurde wie in Beispiel 1 der DE-PS 21 29 168 erhalten, wobei jedoch nur auf einen Trockenstoffgehalt von 74 Gew.-% eingedampft wurde.

Die oben angegebenen Bestandteile des Huhnaromas wurden mit Ausnahme des Hühnerfetts in einem Hochdruckhomogenisator einige Minuten bei ca. 50 °C homogenisiert. Dann wurde das Hühnerfett zugefügt, und die Masse wurde erneut bei etwa 50 °C homogenisiert und dann in einem Reaktionsautoklaven behandelt und anschließend durch aktive Kühlung rasch abgekühlt. Man erhielt bei einer Reaktionszeit von 10 Min. und einer Temperatur von 95 °C ein hochkonzentriertes Aroma der Geschmacksrichtung Kochhuhn. Der Zusatz von z. B. 0,1 Gew.-% des erhaltenen Aromakonzentrats zu klaren Brühen reicht aus, um diesen eine deutliche Geschmacks- und Geruchsverstärkung nach Kochhuhn zu geben.

Bei einer Verlängerung der Reaktionszeit auf 20 Min. und einer Erhöhung der Temperatur im Autoklaven auf 120 °C ändert sich der Geschmack in Richtung Brathuhn. Das so gewonnene hochkonzentrierte Aroma kann z. B. in einer Menge von 0,1 Gew.-% Fertiggerichten oder Sossen zugesetzt werden, bei denen Brathuhnaroma erwünscht ist.

Beispiel 2

| Rindfleischaroma | Gew.-% |
| --- | --- |
| Wässriges, konzentriertes Aroma auf Rindfleischbasis, mit einem Trockstoffgehalt von 74 Gew.-% | 70,0 |
| 1-Cysteinhydrochlorid | 0,5 |
| Natriumglutamat | 3,5 |
| Natriuminosinat-Natriumguanylat-Gemisch 1 : 1 | 0,5 |
| Proteinhydrolysatpulver, Fa. FIS (Nestle) Typ « RFB » | 5,0 |
| Saccharose | 5,0 |
| Rindfleischfett | 15,5 |

Die wässrige, konzentrierte Fleischbasis auf der Grundlage von Rindfleisch wurde wie in Beispiel 3 der DE-PS 21 29 168 angegeben, hergestellt.

Die oben angegebenen Bestandteile wurden wie in Beispiel 1 mit Ausnahme des Rindfleischfettes einige Minuten in einem Hochdruckhomogenisator homogenisiert, wonach das Rindfleischfett zugefügt wurde, und es wurde erneut bei etwa 50 °C homogenisiert. Das Homogenisat wurde dann in einem Reaktionsautoklaven thermisch behandelt, und das so behandelte Produkt wurde rasch abgekühlt.

Bei einer Reaktionszeit von 10 Min. und einer Temperatur von 95 °C erhielt man ein hochkonzentriertes Aroma mit der Geschmacksnote gekochtes Rindfleisch. Der Zusatz von z. B. 0,1 Gew.-% dieses Konzentrats zu klaren Brühen reicht aus, um diesem eine deutliche Geschmacks- und Geruchsverbesserung nach gekochtem Rindfleisch zu geben.

Die Erhitzung auf 95 °C und darüber wird vorzugsweise im Autoklaven durchgeführt, um Aromaverluste zu vermeiden ; bei 95 °C baut sich bereits ein Druck auf. Die erhaltenen hochkonzentrierten Aromen sind pastös und enthalten ca. 80 bis 82 % Trockenstoff ; sie lassen sich mit dem Fachmann gut bekannten Trocknungsverfahren in Pulver überführen.

**Patentansprüche**

1. Verfahren zur Herstellung von artspezifischen, konzentrierten Aromen auf Fleischbasis, dadurch gekennzeichnet, dass konzentrierte wässrige Fleischbasen mit Trockenstoffgehalten zwischen 60 und 85 Gew.-%,

a) mit einer oder mehreren Aminosäuren im Gemisch in einer Menge von 0,1 bis 1,4 Gew.-%,

b) mit einem Geschmacksverstärker, insbesondere der Geschmacksrichtung Mononatrium-Glutamat, in einer Menge von 2 bis 7 Gew.-%,

c) mit weiterem Geschmacksverstärker, insbesondere der Geschmacksrichtung Natriuminosinat oder Natriumguanylat oder einem Gemisch beider Stoffe, in einer Menge von 0,2 bis 1,5 Gew.-% und

d) mit Proteinhydrolysaten in einer Menge von 2 bis 20 Gew.-% und

e) mit Zuckerstoffen in einer Menge von 2 bis 20 Gew.-%, zu einer unter Erwärmen auf 40 bis 60 °C homogenen Masse vermischt und

f) der nach a) bis e) erhaltenen homogenen Masse 5 bis 25 Gew.-% Fette von Warmblütern, insbesondere Hühner-, Rinder- oder Schweinefett zugefügt und die Masse bei Temperaturen zwischen 40 bis 60 °C homogenisiert,

g) die nach f) erhaltene homogene Masse 15 bis 45 Minuten lang in einem Reaktionsautoklaven zwischen 90 und 150 °C thermisch behandelt und

h) das Produkt rasch abgekühlt und gegebenenfalls in an sich bekannter Weise in Pulverform überführt wird.

2. Verfahren nach Anspruch 1, dadurch gekennzeichnet, dass das als Ausgangsmaterial verwendete wässrige Fleischbasenkonzentrat in einem Trockenfeststoffgehalt von 60-82 Gew.-%, insbesondere von 74-78 Gew.-% eingesetzt wird.

3. Verfahren nach Anspruch 1 oder 2, dadurch gekennzeichnet, dass als Aminosäuren L-Cystein oder ihre Salze, insbesondere in einer Menge von 0,8 Gew.-% eingesetzt werden.

4. Verfahren nach den Ansprüchen 1 bis 3, dadurch gekennzeichnet, dass Mononatrium-Glutamat in einer Menge von 5 Gew.-% eingesetzt wird.

5. Verfahren nach den Ansprüchen 1 bis 4, dadurch gekennzeichnet, dass Natriuminosinat oder Natriumguanylat oder ein Gemisch davon in einer Menge von 0,8 Gew.-% eingesetzt wird.

6. Verfahren nach den Ansprüchen 1 bis 5, dadurch gekennzeichnet, dass Proteinhydrolysat in einer Menge von 5 bis 10 Gew.-% eingesetzt wird.

7. Verfahren nach den Ansprüchen 1 bis 6, dadurch gekennzeichnet, dass Zuckerstoffe in einer Menge von 5 bis 10 Gew.-% eingesetzt werden.

8. Verfahren nach den Ansprüchen 1 bis 7, dadurch gekennzeichnet, dass die Ausgangsstoffe a) bis e) bei einer Temperatur von 48 bis 52 °C homogenisiert werden.

9. Verfahren nach den Ansprüchen 1 bis 8, dadurch gekennzeichnet, dass das verwendete Warmblüterfett in einer Menge von 15 Gew.-% eingesetzt und insbesondere bei 48 bis 52 °C einhomogenisiert wird.

10. Artspezifische, konzentrierte Aromen auf Fleischbasis, hergestellt gemäß einem der Ansprüche 1 bis 9.

11. Verwendung der Aromen nach Anspruch 10 zur geruchlichen und geschmacklichen Beeinflussung (Aromatisierung) von Nahrungs- und Genußmitteln sowie Tierfuttermitteln.

**Claims**

1. Process for the preparation of type-specific, concentrated flavourings based on meat, characterised in that concentrated aqueous meat extracts containing between 60 and 85 % by weight of dry matter are mixed

a) with one or more amino acids as a mixture in a quantity of 0.1 to 1.4 % by weight,

b) with a flavour booster, in particular of the monosodium glutamate type of flavour, in a quantity of 2 to 7 % by weight,

c) with a further flavour booster, in particular of the sodium inosinate or sodium guanylate type of flavour, or a mixture of the two substances in a quantity of 0.2 to 1.5 % by weight and

d) with protein hydrolysates in a quantity of 2 to 20 % by weight and

e) with sugar substances in a quantity of 2 to 20 % by weight, to give a mass which is homogeneous when heated to 40 to 60 °C, and

f) 5 to 25 % by weight of fats of warm-blooded animals, in particular chicken fat, beef fat or pork fat, are added to the homogeneous mass obtained according to a) to e) and the mass is homogenised at temperatures between 40 and 60 °C,

g) the homogeneous mass obtained according to f) is thermally treated for 15 to 45 minutes in a reaction autoclave between 90 and 150 °C, and

h) the product is rapidly cooled and, if appropriate, converted into a powder form in a manner known per se.

2. Process according to Claim 1, characterised in that the aqueous meat extract concentrate used as the starting material is employed with a dry solids content of 60-82 % by weight, in particular 74-78 % by weight.

3. Process according to Claim 1 or 2, characterised in that L-cysteine or its salts, in particular in a quantity of 0.8 % by weight, are used as the amino acids.

4. Process according to Claims 1 to 3, characterised in that monosodium glutamate is used in a quantity of 5 % by weight.

5. Process according to Claims 1 to 4, characterised in that sodium inosinate or sodium guanylate or a mixture thereof is used in a quantity of 0.8 % by weight.

6. Process according to Claims 1 to 5, characterised in that protein-hydrolysate is used in a quantity of 5 to 10 % by weight.

7. Process according to Claims 1 to 6, characterised in that sugar substances are used in a quantity of 5 to 10 % by weight.

8. Process according to Claims 1 to 7, characterised in that the starting materials a) to e) are homogenised at a temperature of 48 to 52 °C.

9. Process according to Claims 1 to 8, characterised in that the warm-blooded animals' fat used is employed in a quantity of 15 % by weight and homogenised with the mass at, in particular, 48 to 52 °C.

10. Type-specific, concentrated flavourings based on meat, prepared according to one of Claims 1 to 9.

11. Use of the flavourings according to Claim 10 influencing the smell and taste (flavouring) of foodstuffs an luxury foods as well as animal feeding stuffs.


**Revendications**

1. Procédé pour la préparation d'arômes concentrés spécifiques de type à base de viande, caractérisé en ce qu'on mélange des bases carnées aqueuses concentrées, ayant un extrait sec entre 60 et 85 % en poids, à

a) un ou plusieurs acides aminés en mélange, en une concentration de 0,1 à 1,4 % en poids,

b) un exhausteur de goût, en particulier du groupe de sapidité glutamate monosodique, en une concentration de 2 à 7 % en poids,

c) un autre exhausteur de goût, en particulier du groupe de sapidité inosinate de sodium ou guanylate de sodium, ou un mélange des deux substances, en une concentration de 0,2 à 1,5 % en poids, et

d) des hydrolysats protéinés en une concentration de 2 à 20 % en poids, et

e) des sucres en une concentration de 2 à 20 % en poids, pour obtenir une masse homogène sous chauffage à 40 à 60 °C, et

f) qu'on ajoute à la masse homogène obtenue selon a) à e) 5 à 25 % en poids de graisses d'animaux à sang chaud, en particulier de volaille, de bovin ou de porc, et qu'on homogénéise la masse à des températures entre 40 et 60 °C,

g) qu'on fait subir un traitement thermique pendant 15 à 45 minutes dans un réacteur autoclave entre 90 et 150 °C à la masse homogène obtenue selon f), et

h) qu'on refroidit rapidement le produit et le convertit éventuellement, d'une manière connue en soi, sous une forme pulvérulente.

2. Procédé selon la revendication 1, caractérisé en ce que le concentré de base carnée aqueux utilisé en tant que matière de départ est utilisé selon un extrait sec de 60-82 % en poids, en particulier de 74-78 % en poids.

3. Procédé selon la revendication 1 ou 2, caractérisé en ce qu'on utilise en tant qu'acides aminés la L-cystéine ou ses sels, en particulier en une concentration de 0,8 % en poids.

4. Procédé selon les revendications 1 à 3, caractérisé en ce qu'on utilise du glutamate monosodique en une concentration de 5 % en poids.

5. Procédé selon les revendications 1 à 4, caractérisé en ce qu'on utilise de l'inosinate de sodium ou du guanylate de sodium ou un de leurs mélanges en une concentration de 0,8 % en poids.

6. Procédé selon les revendications 1 à 5, caractérisé en ce qu'on utilise un hydrolysat protéiné en une concentration de 5 à 10 % en poids.

7. Procédé selon les revendications 1 à 6, caractérisé en ce qu'on utilise des sucres en une concentration de 5 à 10 % en poids.

8. Procédé selon les revendications 1 à 7, caractérisé en ce que les substances de départ a) à e) sont homogénéisées à une température de 48 à 52 °C.

9. Procédé selon les revendications 1 à 8, caractérisé en ce que la graisse d'animaux à sang chaud est utilisée en une concentration de 15 % en poids et en particulier est incorporée par homogénéisation à 48 à 52 °C.

10. Arômes concentrés, spécifiques de type, à base de viande, préparés selon l'une des revendications 1 à 9.

11. Utilisation des arômes selon la revendication 10 pour influer en goût et en odeur (aromatisation) sur des produits alimentaires et stimulants, ainsi que sur des produits pour l'alimentation animale.

5